# FASCICULE DE BREVET EUROPEEN

(11) **EP 4 045 770 B1**
(45) Date de publication et mention de la délivrance du brevet: **15.04.2026**
(21) Numéro de dépôt: 20801347.4
(22) Date de dépôt: 14.10.2020
(51) Int. Cl.: F01D 21/12, F02C 9/46, F02C 7/25

(54) **PROCEDE D'ARRET RAPIDE DU ROTOR D'UN HELICOPTERE APRES ATTERRISSAGE**
VERFAHREN ZUM SCHNELLEN ANHALTEN EINES ROTORS EINES HUBSCHRAUBERS NACH DER LANDUNG
METHOD FOR RAPIDLY STOPPING A ROTOR OF A HELICOPTER AFTER LANDING

(30) Priorité: 17.10.2019 FR 1911630
(43) Date de publication de la demande: 24.08.2022
(73) Titulaire: Safran Helicopter Engines, 64510 Bordes (FR)
(72) Inventeur: BEDRINE, Olivier, 77550 MOISSY-CRAMAYEL (FR); BAZET, Jean, Michel, Frédéric, Louis, 77550 MOISSY-CRAMAYEL (FR); CAZAUX, David, 77550 MOISSY-CRAMAYEL (FR)
(74) Mandataire: Cabinet Beau de Loménie
(86) Numéro de dépôt international: PCT/FR2020/051826
(87) Numéro de publication internationale: WO 2021/074531

(56) Documents cités:
- EP-A1- 3 075 662
- EP-A1- 3 204 618
- EP-A1- 3 211 184
- EP-A1- 3 660 276
- US-A- 4 738 098

## Description

### Domaine Technique

La présente invention se rapporte au domaine général des turbomachines d'hélicoptère et plus particulièrement la procédure d'arrêt rapide du rotor principal d'un hélicoptère après atterrissage, c'est-à-dire du rotor assurant la propulsion.

### Technique antérieure

Dans les différentes phases de vol d'un hélicoptère, la phase d'atterrissage comprend généralement une phase stationnaire qui nécessite de disposer d'une forte puissance au niveau du ou des turbomachines formant les moteurs de l'hélicoptère.

Après cette phase d'atterrissage, les pilotes cherchent à arrêter rapidement le rotor principal de l'hélicoptère afin de pouvoir déposer les passagers ou les blessés.

Comme les moteurs, ou le moteur dans le cas d'un hélicoptère monomoteur, ont été utilisés à des régimes de fortes puissances, un arrêt brusque est préjudiciable au moteur. Pour éviter d'endommager le moteur, il est courant d'indiquer aux pilotes de respecter une phase de stabilisation thermique à un régime dit de ralenti pendant quelques minutes pour se prémunir notamment des contraintes mécaniques, telles que la dilatation différentielle, ou d'une cokéfaction de l'huile, qui sont liées à de fortes variations de demande de puissance. Il existe effectivement un risque que l'huile ou le carburant du moteur ne se cokéfie au niveau des parties chaudes du moteur, par exemple au niveau des injecteurs de carburant dans la chambre de combustion du moteur.

La durée de cette phase de stabilisation du moteur est généralement prédéfinie en fonction du type de moteur et est typiquement comprise entre 30 secondes et 2 minutes.

Ce temps d'attente peut être particulièrement critique lorsque l'on parle d'un hélicoptère rapide dont le but est de pouvoir réaliser rapidement une mission donnée et donc limiter les temps d'arrêt.

Les turbomachines installées sur les hélicoptères sont généralement du type à turbine libre, c'est-à-dire qu'elles comprennent un générateur de gaz et une turbine non liée mécaniquement au générateur de gaz. La turbine libre permet de fournir la puissance mécanique au rotor de l'hélicoptère via une boîte de transmission principale. Un générateur de gaz comprend un compresseur, une chambre de combustion, et une turbine mécaniquement liée au compresseur par un arbre commun aux parties tournantes de la turbine et du compresseur. La turbine libre, disposée en aval de la turbine du générateur de gaz, est mécaniquement indépendante de l'arbre du générateur de gaz.

Or, tant qu'un moteur du type à turbine libre est maintenu au ralenti, les gaz du générateur de gaz exercent une certaine puissance sur la turbine libre, et donc un couple sur le rotor via la boîte de transmission de puissance. Ceci implique d'importantes contraintes mécaniques dans le dimensionnement du frein qui pour freiner le rotor doit contrer le couple fourni par la puissance résiduelle de la turbine libre.

Outre la solution d'arrêt du rotor consistant à stabiliser le moteur au ralenti une fois au sol pendant au plus 2 minutes, une seconde solution envisageable mais non réalisée consisterait à bloquer la turbine libre à l'aide d'un frein en positionnant le moteur à un régime de ralenti suffisamment faible pour minimiser le couple frein. L'utilisation du frein après l'atterrissage permet de stabiliser thermiquement le moteur et de bloquer rapidement le rotor. Son dimensionnement reste cependant délicat car il doit permettre de contrer la puissance résiduelle de la turbine libre et de freiner le rotor.

Cette solution peut éventuellement répondre à une application monomoteur mais a un impact important pour les bimoteurs. En effet, le frein doit être dimensionné pour freiner le rotor et bloquer les deux turbines libres. Ce type de dimensionnement risque de trop impacter l'encombrement et la masse du frein.

Les documents US4738098A, EP3075662A1 et EP3204618A1 concernent des procédés d'arrêt d'une turbomachine d'hélicoptère selon l'art antérieur.

### Exposé de l'invention

A cet effet, la présente invention propose un procédé d'arrêt rapide du rotor permettant notamment de ne plus fournir de puissance au rotor dès l'atterrissage et ainsi de pouvoir l'arrêter rapidement tout en conservant une phase de stabilisation thermique du générateur de gaz de la ou des turbomachine(s).

L'invention concerne un procédé d'arrêt rapide du rotor principal d'un hélicoptère après atterrissage selon la revendication 1, ledit rotor principal étant le rotor de propulsion et/ou sustentation. L'hélicoptère comprend un rotor principal pour la propulsion de l'hélicoptère, au moins une turbomachine, une boîte de transmission principale, une unité de commande de turbomachine, un réseau électrique d'alimentation, et au moins une machine électrique couplée au réseau électrique, ladite au moins une turbomachine comportant un générateur de gaz doté d'un arbre mécanique, une turbine libre couplée au rotor principal via la boîte de transmission principale et mécaniquement indépendante de l'arbre mécanique du générateur de gaz, et un système configuré pour coupler mécaniquement une machine électrique au générateur de gaz.

Selon une caractéristique générale de l'invention, le procédé comprend, suite à une étape de demande d'arrêt rapide du moteur par un pilote de l'hélicoptère provocant l'extinction de la chambre de combustion du générateur de gaz d'au moins une turbomachine, les étapes suivantes :
- une détection d'absence de phase de stabilisation thermique du générateur de gaz d'au moins une turbomachine pour confirmer que la demande d'arrêt du moteur est une demande d'arrêt rapide du rotor principal,
- en cas d'absence de phase de stabilisation thermique, un maintien en rotation du générateur de gaz pour chaque turbomachine dont la chambre de combustion est éteinte à l'aide de ladite au moins une machine électrique couplée mécaniquement au générateur de gaz et alimentée par le réseau électrique pour continuer à ventiler à l'arrêt le générateur de gaz lorsque le pilote de l'hélicoptère décide d'arrêter rapidement le rotor, et
- un arrêt du rotor principal de l'hélicoptère à l'aide d'un frein.

L'arrêt des moteurs de l'hélicoptère, c'est-à-dire l'application d'une puissance nulle sur la turbine libre et l'extinction de la chambre de combustion, couplé à l'utilisation d'un frein uniquement dimensionné pour freiner le rotor de propulsion permet au pilote de disposer rapidement d'un rotor à vitesse nulle et offre ainsi au pilote une meilleure capacité opérationnelle pour réaliser rapidement une mission donnée comme par exemple débarquer et/ou embarquer des passagers.

La ventilation du générateur de gaz est ainsi réalisée à partir des machines électriques déjà existantes sur la turbomachine, sans impacter la vitesse du rotor de l'hélicoptère car la turbine libre n'est pas entraînée, et sans que son activation ne nécessite une action du pilote. En outre, la ventilation du générateur de gaz est d'autant plus efficace que la chambre de combustion est éteinte.

La durée de ventilation peut être de plusieurs minutes et permet de limiter par exemple les risques de blocage des rotors ou de cokéfaction du lubrifiant des paliers. Dans le cas d'un hélicoptère multi-moteurs, c'est-à-dire doté d'au moins deux turbomachines, les moteurs doivent être ventilés en même temps.

Dans l'art antérieur, la mise en rotation du générateur de gaz éteint par ladite au moins une machine électrique peut être maintenue pendant une durée de ventilation prédéfinie à partir de l'extinction de la chambre de combustion, et l'alimentation de la machine électrique être arrêtée à la fin de la durée de ventilation.

Dans le procédé d'arrêt rapide du rotor d'hélicoptère selon l'invention, la mise en rotation du générateur de gaz éteint par ladite au moins une machine électrique est maintenue tant qu'au moins une température mesurée du générateur de gaz est supérieure à un premier seuil et/ou la valeur absolue d'un gradient de température mesurée est supérieure à un second seuil.

Dans un premier aspect, la mise en rotation du générateur de gaz éteint peut ainsi être maintenue pendant une durée de ventilation prédéfinie, mais éteinte avant l'expiration de cette durée de ventilation dès que la température mesurée du générateur de gaz est inférieure au premier seuil.

Dans un deuxième aspect du procédé d'arrêt rapide du rotor d'hélicoptère, le réseau électrique de l'hélicoptère peut également être alimenté en électricité par au moins un alternateur entraîné par une unité de puissance auxiliaire (APU).

Le réseau électrique étant alors alimenté par au moins une unité de puissance auxiliaire, l'énergie nécessaire pour alimenter ladite au moins une machine électrique pour la ventilation du générateur de gaz de ladite au moins une turbomachine peut provenir d'un alternateur entraîné par une unité de puissance auxiliaire ainsi que d'au moins une batterie éventuellement.

L'alimentation des machines électriques par une unité de puissance auxiliaire lors de la phase de stabilisation thermique à la suite d'un atterrissage peut permettre en outre de conserver suffisamment d'énergie électrique dans au moins une batterie pour un décollage en urgence.

Dans un troisième aspect du procédé d'arrêt rapide du rotor d'hélicoptère, dans lequel l'hélicoptère comprend au moins deux turbomachines ayant chacune une turbine libre raccordée au rotor principal via la boîte de transmission principale, le procédé peut comprendre en outre, préalablement à l'étape de de demande d'arrêt rapide du moteur, une étape de demande d'un fonctionnement en mode d'unité de puissance auxiliaire d'au moins une turbomachine entraînant les étapes suivantes gérées par l'unité de commande de la turbomachine :
- une augmentation du couple d'au moins une turbomachine jusqu'à ce qu'au moins une autre turbomachine fournisse un couple nul à la boîte de transmission principale,
- un décrabotage de ladite au moins une turbomachine fournissant un couple nul, et
- un fonctionnement en mode d'unité de puissance auxiliaire de ladite au moins une turbomachine décrabotée pour alimenter le réseau électrique de l'hélicoptère en électricité.

L'étape de demande d'arrêt rapide du moteur par le pilote de l'hélicoptère provoque l'extinction de la chambre de combustion du générateur de gaz de chaque turbomachine encore crabotée à la boîte de transmission principale, et l'étape de détection d'absence de phase de stabilisation thermique est appliquée au générateur de gaz de chaque turbomachine encore crabotée à la boîte de transmission principale.

Ce troisième aspect du procédé permet à la fois d'éteindre chaque turbomachine encore crabotée en continuant à la ventiler à l'arrêt, et d'utiliser une turbomachine décrabotée comme une unité de puissance auxiliaire pour alimenter la machine électrique destinée à ventiler le générateur de gaz d'une turbomachine éteinte, pendant sa phase de stabilisation thermique, et ainsi de ne pas puiser dans des batteries l'énergie électrique nécessaire à cette alimentation. Une turbomachine utilisée comme unité de puissance auxiliaire opèrera bien sa stabilisation thermique normalement puisqu'elle ne fournit qu'une faible puissance.

Dans un quatrième e aspect du procédé d'arrêt rapide du rotor d'hélicoptère, l'étape de demande d'un fonctionnement en mode d'unité de puissance auxiliaire d'au moins une turbomachine est demandée par le pilote de l'hélicoptère préalablement à l'étape de demande d'arrêt rapide du moteur, et une information sur le fonctionnement effectif en mode d'unité de puissance auxiliaire d'au moins une turbomachine est transmise au pilote préalablement à sa demande d'arrêt rapide moteur.

Dans un cinquième aspect du procédé d'arrêt rapide du rotor d'hélicoptère, le réseau électrique de l'hélicoptère peut être configuré pour être alimenté en électricité par au moins un alternateur entraîné par une unité de puissance auxiliaire (APU).

Dans un sixième du procédé d'arrêt rapide du rotor d'hélicoptère, le réseau électrique de l'hélicoptère peut comprendre au moins une batterie du réseau électrique alimentant ladite machine électrique.

### Brève description des dessins

[Fig. 1] La figure 1 est une vue schématique simplifiée d'un ensemble propulsif d'hélicoptère avec une boîte de transmission principale selon l'état de la technique.
[Fig. 2] La figure 2 est une vue schématique en coupe d'une turbomachine à turbine libre selon l'état de la technique.
[Fig. 3] La figure 3 représente un logigramme d'un procédé d'arrêt rapide d'un rotor principal d'un hélicoptère selon un premier mode de mise en œuvre.
[Fig. 4] La figure 4 présente un graphique d'évolution temporelle des vitesses de rotation du rotor et du générateur de gaz lors de l'application du procédé d'arrêt de la figure 4.
[Fig. 5] La figure 5 représente un logigramme d'un procédé d'arrêt rapide d'un rotor principal d'un hélicoptère selon un second mode de mise en œuvre.
[Fig. 6] La figure 6 présente un graphique d'évolution temporelle des vitesses de rotation du rotor et du générateur de gaz lors de l'application du procédé d'arrêt de la figure 5.

### Description des modes de réalisation

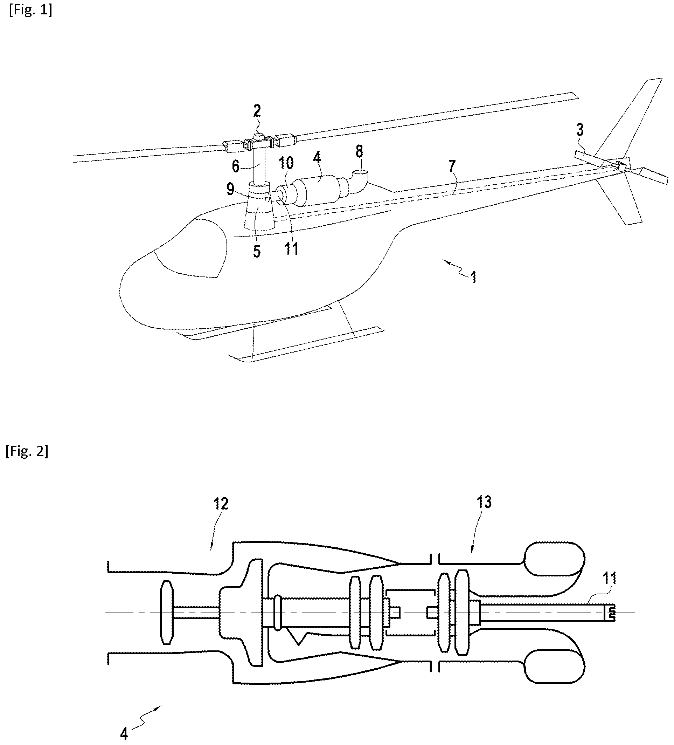

Sur la figure 1 est présentée schématiquement un ensemble propulsif d'un hélicoptère 1 avec une boîte de transmission principale selon l'état de la technique.

L'hélicoptère 1 est équipé d'un rotor principal 2, pour la sustentation et la propulsion, ainsi que d'un rotor anti-couple. Dans l'exemple illustré sur la figure 1, le rotor anti-couple est un rotor de queue 3 mais il pourrait être un rotor coaxial au rotor principal. La chaîne motrice de l'hélicoptère comprend en particulier une turbomachine 4 pour fournir la puissance nécessaire au vol de l'hélicoptère et une boîte de transmission principale 5 dont la fonction est de transmettre la puissance de la turbomachine 4 au rotor principal 2 et au rotor de queue 3 pour les mettre en mouvement par des mécanismes qui sont schématiquement représentés sur la figure 1 par un premier arbre 6 mécaniquement couplé au rotor principal 2 et un deuxième arbre 7 mécaniquement couplé au rotor de queue 3. La turbomachine 4 est représentée ici avec son échappement 8.

Généralement, la boîte de transmission principale 5 comporte une entrée mécanique 9 à partir de laquelle sont entraînés les pignons internes qui actionnent les arbres 6 et 7 respectivement couplés au rotor principal 2 et au rotor de queue 3.

Généralement aussi, la turbomachine comporte une sortie mécanique 10, qui peut être une première série d'engrenages réduisant le nombre de tours, couplée à l'entrée mécanique 9 de la boîte de transmission principale 5 par un troisième arbre **11.**

Sur la figure 2 est représentée schématiquement une vue en coupe d'une turbomachine 4 à turbine libre selon l'état de la technique. La turbomachine 4 comprend un générateur de gaz 12 et une turbine libre 13 à laquelle le troisième arbre **11** est mécaniquement raccordé. Comme cela est connu, la turbine libre 13 est mécaniquement indépendante du générateur de gaz 12, en d'autres termes le troisième arbre **11** n'est pas accouplé à l'arbre du générateur de gaz.

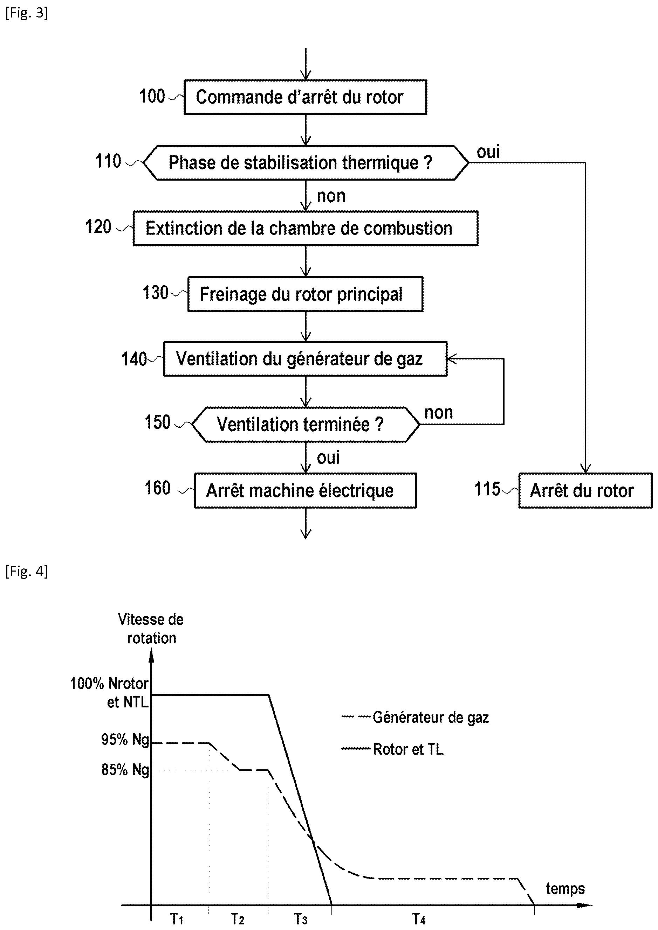

Sur la figure 3 est représenté un ordinogramme d'un procédé d'arrêt rapide d'un rotor principal d'un hélicoptère selon un premier mode de mise en œuvre.

Dans ce premier mode de mise en œuvre, l'hélicoptère 1 peut comprendre une turbomachine 4 ou plusieurs turbomachines.

Dans une première étape 100 du procédé, à l'issue d'une phase d'atterrissage de l'hélicoptère 1, le pilote émet une commande d'arrêt du moteur pour pouvoir réaliser rapidement une mission donnée comme par exemple débarquer ou embarquer des passagers.

Dans une deuxième étape **110** du procédé, une unité électronique de contrôle détermine si une phase de stabilisation thermique du générateur de gaz 12 de la turbomachine 4 a déjà eu lieu. Si elle a déjà eu lieu, dans une étape 115, l'unité de contrôle transmet un signal pour commander l'extinction de la chambre du générateur de gaz 12 à la suite de quoi le pilote commande l'arrêt du rotor principal 2 par application d'un frein sur l'arbre 6 du rotor principal 2.

Si, au contraire, aucune phase de stabilisation thermique n'est détectée, l'unité de contrôle commande l'extinction de la chambre de combustion du générateur de gaz 12 de la turbomachine 4 dans une étape 120, puis le freinage du rotor principal 2 dans une étape 130, et la ventilation du générateur de gaz 12 de la turbomachine 4 dans une étape 140. La ventilation du générateur de gaz 12 est réalisée par la mise en rotation du générateur de gaz 12 par une machine électrique qui est alimentée par le réseau électrique de l'hélicoptère. Le réseau électrique de l'hélicoptère peut être couplé à une ou plusieurs batterie(s), et éventuellement à au moins une unité auxiliaire de puissance.

Dans une étape suivante 150, l'unité de commande vérifie si la ventilation du générateur de gaz 12 est terminée. Tant qu'elle n'est pas terminée, le procédé réitère les étapes 140 et 150.

Une fois la ventilation du générateur de gaz terminée, l'unité de contrôle commande, dans une étape 160, une coupure de l'alimentation électrique de la machine électrique mettant en rotation le générateur de gaz 12.

Avec un tel procédé on obtient ainsi une évolution temporelle des vitesses de rotation du rotor et de la turbine libre en trait plein, et du générateur de gaz en pointillés comme représentée sur le graphique illustré sur la figure 4.

Pendant une première phase T₁, l'hélicoptère atterrit et utilise la puissance des turbomachines. Après l'atterrissage, dans une deuxième phase T₂, le pilote baisse le pas du rotor ayant pour conséquence de réduire la puissance délivrée par les turbomachines au juste besoin pour maintenir la vitesse du rotor principal 2. Puis, dans une troisième phase T₃, suite à la commande d'arrêt du moteur actionnée par le pilote, la vitesse du rotor décroit rapidement jusqu'à l'arrêt total, et la vitesse de rotation du générateur chute également. Suite à l'arrêt du rotor, dans une quatrième phase T₄, la vitesse de rotation du générateur de gaz 12 est amenée puis maintenue jusqu'à un seuil de vitesse de ventilation. Une fois la ventilation terminée, la machine électrique mettant en rotation le générateur de gaz 12 pendant la phase de ventilation est arrêtée, et la vitesse de rotation du générateur de gaz 12 décroît très rapidement jusqu'à une vitesse nulle.

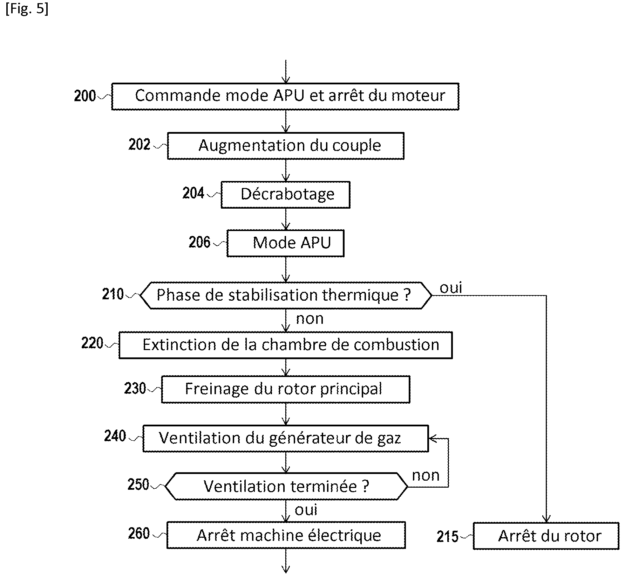

Sur la figure 5 est représenté un ordinogramme d'un procédé d'arrêt rapide d'un rotor principal d'un hélicoptère selon un second mode de mise en œuvre.

Dans ce second mode de mise en œuvre, l'hélicoptère 1 comprend au moins deux turbomachines 4.

Dans une première étape 200 du procédé, à l'issue d'une phase d'atterrissage de l'hélicoptère 1, le pilote émet une demande d'un fonctionnement en mode d'unité de puissance auxiliaire d'une des deux turbomachines et une commande d'arrêt de l'autre moteur pour pouvoir réaliser rapidement une mission donnée comme par exemple débarquer ou embarquer des passagers.

Dans une alternative la demande de passage en mode APU pourrait être générée par l'unité de contrôle à la réception d'une commande d'arrêt rapide sans qu'il n'y ait eu de transition thermique.

Dans une étape 212, le couple d'au moins une turbomachine est augmenté jusqu'à ce qu'au moins une autre turbomachine fournisse un couple nul à la boîte de transmission principale 5. Puis dans une étape suivante 214, l'unité de contrôle commande un décrabotage de la turbomachine ou des turbomachines fournissant un couple nul, et active, dans une étape 216, un fonctionnement de la turbomachine ou des turbomachines ainsi décrabotées dans un mode de fonctionnement de production d'énergie électrique, dit d'unité de puissance auxiliaire, pour alimenter le réseau électrique de l'hélicoptère 1 en électricité.

Dans une deuxième étape 210 du procédé, une unité électronique de contrôle détermine si une phase de stabilisation thermique a déjà eu lieu, c'est-à-dire si la turbomachine est stabilisée thermiquement. Si elle a déjà eu lieu, l'unité de contrôle commande l'arrêt de la turbomachine et l'arrêt du rotor par application d'un frein sur l'arbre 6 du rotor principal 2 dans une étape 215.

Si, au contraire, aucune phase de stabilisation thermique n'est détectée, l'unité de contrôle commande, dans une étape 220, l'extinction de la chambre à combustion du générateur de gaz 12 d'au moins une des turbomachines 4 encore crabotée, puis le freinage du rotor principal 2 dans une étape 230. Et, dans une étape 240, elle commande la ventilation du générateur de gaz 12 de ladite au moins une turbomachine 4 encore crabotée et dont la chambre de combustion est éteinte. La ventilation du générateur de gaz 12 est réalisée par la mise en rotation du générateur de gaz 12 par une machine électrique qui est alimentée par le réseau électrique de l'hélicoptère, et donc par au moins une turbomachine décrabotée fonctionnant dans un mode d'unité de puissance auxiliaire.

Dans une étape suivante 250, l'unité de commande vérifie si la ventilation du générateur de gaz 12 est terminée. Tant qu'elle n'est pas terminée, le procédé réitère les étapes 240 et 250.

Une fois la ventilation du générateur de gaz terminée, l'unité de contrôle commande, dans une étape 260, une coupure de l'alimentation électrique de la machine électrique mettant en rotation le générateur de gaz 12.

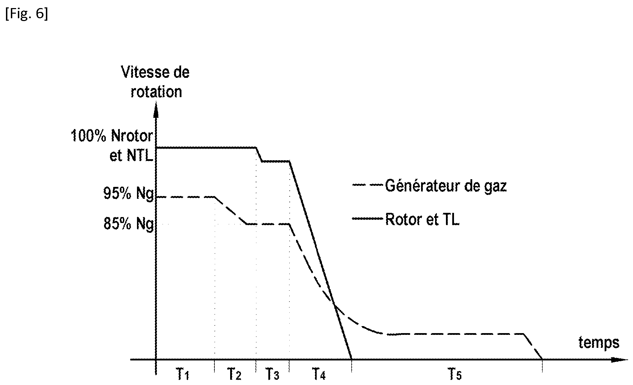

Avec un tel procédé on obtient ainsi une évolution temporelle des vitesses de rotation du rotor de la turbine libre en trait plein, et du générateur de gaz en pointillés comme représentée sur le graphique illustré sur la figure 6.

Pendant une première phase t₁, l'hélicoptère atterri et utilise la puissance des turbomachines. Après l'atterrissage, dans une deuxième phase t₂, le pilote baisse le pas du rotor ayant pour conséquence de réduire la puissance délivrée par les turbomachines au juste besoin pour maintenir la vitesse du rotor principal 2. Puis, dans une troisième phase t₃, l'unité de contrôle réalise les étapes 212 à 216 pour sélectionner au moins une des turbomachines et la passer dans un mode d'unité de puissance auxiliaire et commande l'arrêt du moteur encore crabotée.

Ensuite, dans une quatrième phase, la chambre de combustion d'au moins une des turbomachines encore crabotée est éteinte et la vitesse de rotation du générateur chute. Le rotor principal est freiné ce qui entraîne une chute de la vitesse du rotor principal 2 jusqu'à l'arrêt total,

Suite à l'arrêt du rotor, dans une quatrième phase t₄, la vitesse de rotation du générateur de gaz 12 est amenée puis maintenue jusqu'à un seuil de vitesse de ventilation. Une fois la ventilation terminée, la machine électrique mettant en rotation le générateur de gaz 12 pendant la phase de ventilation est arrêtée, et la vitesse de rotation du générateur de gaz 12 décroît très rapidement jusqu'à une vitesse nulle.

## Revendications

1. Procédé d'arrêt rapide du rotor principal d'un hélicoptère après atterrissage,
l'hélicoptère comprenant un rotor principal (2) pour la propulsion de l'hélicoptère (1), au moins une turbomachine (4), une boîte de transmission principale (5) raccordée entre ladite au moins une turbomachine (4) et le rotor principal (2), une unité de commande de turbomachine, un réseau électrique d'alimentation, et au moins une machine électrique couplée au réseau électrique, ladite au moins une turbomachine (4) comportant un générateur de gaz (12) doté d'un arbre mécanique, une turbine libre (13) couplée au rotor principal (4) via la boîte de transmission principale (5) et mécaniquement indépendante de l'arbre mécanique du générateur de gaz (12), et un système configuré pour coupler mécaniquement une machine électrique au générateur de gaz (12),
le procédé comprenant, suite à une étape de demande (100, 200) d'arrêt rapide du moteur par un pilote de l'hélicoptère (1) provocant l'extinction de la chambre de combustion du générateur de gaz (12) d'au moins une turbomachine (4), les étapes suivantes gérées par l'unité de commande de la turbomachine :
- une détection (110, 210) d'absence de phase de stabilisation thermique du générateur de gaz (12) d'au moins une turbomachine (4) pour confirmer que la demande d'arrêt du moteur est une demande d'arrêt rapide du rotor principal (2),
- en cas d'absence de phase de stabilisation thermique, un maintien (140, 240) en rotation du générateur de gaz (12) pour chaque turbomachine (4) dont la chambre de combustion est éteinte à l'aide de ladite au moins une machine électrique couplée mécaniquement au générateur de gaz et alimentée par le réseau électrique, pour ventiler le générateur de gaz (12), et
- un arrêt (160, 260) du rotor principal (2) de l'hélicoptère (1) à l'aide d'un frein, le procédé étant **caractérisé en ce que** la mise en rotation par ladite au moins une machine électrique du générateur de gaz (12) éteint est maintenue tant qu'au moins une température mesurée du générateur de gaz est supérieure à un premier seuil et/ou la valeur absolue d'un gradient de température mesurée est supérieure à un second seuil, sinon l'alimentation de la machine électrique est arrêtée.

2. Procédé selon la revendication 1, dans lequel la mise en rotation du générateur de gaz éteint est maintenue pendant une durée de ventilation prédéfinie, mais éteinte avant l'expiration de cette durée de ventilation dès que la température mesurée du générateur de gaz est inférieure au premier seuil.

3. Procédé selon l'une des revendications 1 ou 2 dans lequel l'hélicoptère (1) comprend au moins deux turbomachines (4) ayant chacune une turbine libre (13) raccordée au rotor principal (2) via la boîte de transmission principale (5), et le procédé comprend en outre, préalablement à l'étape de demande (100, 200) d'arrêt rapide du moteur, une étape de demande d'un fonctionnement en mode d'unité de puissance auxiliaire d'au moins une turbomachine (4) entraînant les étapes suivantes gérées par l'unité de commande de la turbomachine (4) :
- une augmentation (212) du couple d'au moins une turbomachine jusqu'à ce qu'au moins une autre turbomachine fournisse un couple nul à la boîte de transmission principale,
- un décrabotage (214) de ladite au moins une turbomachine fournissant un couple nul, et
- un fonctionnement (216) en mode d'unité de puissance auxiliaire de ladite au moins une turbomachine décrabotée pour entraîner une machine électrique et alimenter le réseau électrique de l'hélicoptère en électricité, l'étape de demande (100, 200) d'arrêt rapide du moteur par le pilote de l'hélicoptère (1) provoquant l'extinction (230) de la chambre de combustion du générateur de gaz de chaque turbomachine encore crabotée à la boîte de transmission principale, et l'étape de détection (110, 210) d'absence de phase de stabilisation thermique étant appliquée au générateur de gaz (12) de chaque turbomachine encore crabotée à la boîte de transmission principale.

4. Procédé selon la revendication 3, dans lequel l'étape de demande d'un fonctionnement en mode d'unité de puissance auxiliaire d'au moins une turbomachine est demandée par le pilote de l'hélicoptère (1) préalablement à l'étape de demande (100, 200) d'arrêt rapide du moteur, et une information sur le fonctionnement effectif en mode d'unité de puissance auxiliaire d'au moins une turbomachine est transmise au pilote préalablement à sa demande (100, 200) d'arrêt rapide du moteur.

5. Procédé selon l'une des revendications 1 à 4, dans lequel le réseau électrique de l'hélicoptère est configuré pour être alimenté en électricité par au moins un alternateur entraîné par une unité de puissance auxiliaire.

6. Procédé selon l'une des revendications 1 à 5, dans lequel le réseau électrique de l'hélicoptère comprend au moins une batterie du réseau électrique alimentant ladite machine électrique.

## Patentansprüche

1. Verfahren zum schnellen Anhalten des Hauptrotors eines Hubschraubers nach der Landung,
wobei der Hubschrauber einen Hauptrotor (2) für den Antrieb des Hubschraubers (1), mindestens eine Turbomaschine (4), ein Hauptgetriebe (5), das zwischen der mindestens einen Turbomaschine (4) und dem Hauptrotor (2) verbunden ist, eine Steuereinheit der Turbomaschine, ein elektrisches Versorgungsnetz und mindestens eine elektrische Maschine, die an das elektrische Netz gekoppelt ist, umfasst, wobei die mindestens eine Turbomaschine (4) einen Gasgenerator (12), der mit einer mechanischen Welle ausgestattet ist, eine freie Turbine (13), die über das Hauptgetriebe (5) und mechanisch unabhängig von der mechanischen Welle des Gasgenerators (12) an den Hauptrotor (4) gekoppelt ist, und ein System, das dazu ausgestaltet ist, eine elektrische Maschine mechanisch an den Gasgenerator (12) zu koppeln, beinhaltet,
wobei das Verfahren nach einem Schritt des Anforderns (100, 200) von schnellem Anhalten des Motors durch einen Piloten des Hubschraubers (1), der das Abschalten der Brennkammer des Gasgenerators (12) von mindestens einer Turbomaschine (4) bewirkt, die folgenden Schritte umfasst, die durch die Steuereinheit der Turbomaschine verwaltet werden:
- Erfassen (110, 210) von Nichtvorhandensein einer thermischen Stabilisierungsphase des Gasgenerators (12) von mindestens einer Turbomaschine (4), um zu bestätigen, dass das Anfordern von Anhalten des Motors ein Anfordern von schnellem Anhalten des Hauptmotors (2) ist,
- im Falle von Nichtvorhandensein einer thermischen Stabilisierungsphase, Halten (140, 240) des Gasgenerators (12) in Drehung für jede Turbomaschine (4), deren Brennkammer abgeschaltet ist, mit Hilfe der mindestens einen elektrischen Maschine, die mechanisch an den Gasgenerator gekoppelt ist und durch das elektrische Netz versorgt wird, um den Gasgenerator (12) zu belüften, und
- Anhalten (160, 260) des Hauptrotors (2) des Hubschraubers (1) mit Hilfe einer Bremse,
wobei das Verfahren **dadurch gekennzeichnet ist, dass** das Versetzen in Drehung durch die mindestens eine elektrische Maschine des abgeschalteten Gasgenerators (12) gehalten wird, wenn mindestens eine gemessene Temperatur des Gasgenerators höher als ein erster Schwellenwert ist und/oder der gemessene Absolutwert eines Temperaturgradienten höher als ein zweiter Schwellenwert ist, wobei andernfalls die Versorgung der elektrischen Maschine angehalten wird.

2. Verfahren nach Anspruch 1, wobei das Versetzen in Drehung des abgeschalteten Gasgenerators während einer vordefinierten Entlüftungsdauer gehalten wird, aber vor Ablauf dieser Entlüftungsdauer abgeschaltet wird, sobald die gemessene Temperatur des Gasgenerators niedriger als der erste Schwellenwert ist.

3. Verfahren nach einem der Ansprüche 1 oder 2, wobei der Hubschrauber (1) zumindest zwei Turbomaschinen (4) umfasst, die jeweils eine freie Turbine (13) aufweisen, die mit dem Hauptrotor (2) über das Hauptgetriebe (5) verbunden ist, und das Verfahren ferner vor dem Schritt des Anforderns (100, 200) von schnellem Anhalten des Motors einen Schritt des Anforderns eines Betriebs im Hilfsenergieeinheitsmodus von mindestens einer Turbomaschine (4) umfasst, der die folgenden Schritte mit sich bringt, die durch die Steuereinheit der Turbomaschine (4) verwaltet werden:
- Erhöhen (212) des Drehmoments von mindestens einer Turbomaschine, bis mindestens eine andere Turbomaschine ein Drehmoment von Null an das Hauptgetriebe liefert,
- Entkoppeln (214) der mindestens einen Turbomaschine, die ein Drehmoment von Null liefert, und
- Arbeiten (216) im Hilfsenergieeinheitsmodus der mindestens einen entkoppelten Turbomaschine, um eine elektrische Maschine anzutreiben und das elektrische Netz des Hubschraubers mit Elektrizität zu versorgen, wobei der Schritt des Anforderns (100, 200) von schnellem Abschalten des Motors durch den Piloten des Hubschraubers (1) Abschalten (230) der Brennkammer des Gasgenerators jeder Turbomaschine bewirkt, die noch mit dem Hauptgetriebe verbunden ist, und der Schritt des Erfassens (110, 210) von Nichtvorhandensein einer thermischen Stabilisierungsphase auf den Gasgenerator (12) jeder Turbomaschine angewendet wird, die noch mit dem Hauptgetriebe verbunden ist.

4. Verfahren nach Anspruch 3, wobei der Schritt des Anforderns eines Betriebs im Hilfsenergieeinheitsmodus von mindestens einer Turbomaschine durch den Piloten des Hubschraubers (1) vor dem Schritt des Anforderns (100, 200) von schnellem Anhalten des Motors angefordert wird, und Informationen über den tatsächlichen Betrieb im Hilfsenergieeinheitsmodus von mindestens einer Turbomaschine an den Piloten vor seinem Anfordern (100, 200) von schnellem Anhalten des Motors übermittelt werden.

5. Verfahren nach einem der Ansprüche 1 bis 4, wobei das elektrische Netz des Hubschraubers dazu ausgestaltet ist, durch mindestens einen Wechselstromerzeuger, der durch eine Hilfsenergieeinheit angetrieben wird, mit Elektrizität versorgt zu werden.

6. Verfahren nach einem der Ansprüche 1 bis 5, wobei das elektrische Netz des Hubschraubers mindestens eine Batterie des elektrischen Netzes umfasst, welche die elektrische Maschine versorgt.

## Claims

1. A method for quickly stopping the main rotor of a helicopter after landing,
the helicopter comprising a main rotor (2) for the propulsion of the helicopter (1), at least one turbomachine (4), a main gearbox (5) connected between said at least one turbomachine (4) and the main rotor (2), a turbomachine control unit, an electric power supply network, and at least one electrical machine coupled to the electrical network, said at least one turbomachine (4) including a gas generator (12) equipped with a mechanical shaft, a free turbine (13) coupled to the main rotor (4) via the main gearbox (5) and mechanically independent of the mechanical shaft of the gas generator (12), and a system configured to mechanically couple an electrical machine to the gas generator (12),
the method comprising, following a step of requesting (100, 200) the quick stop of the engine by a helicopter (1) pilot, causing the extinction of the combustion chamber of the gas generator (12) of at least one turbomachine (4), the following steps managed by the control unit of the turbomachine:
- detecting (110, 210) the absence of the thermal stabilization phase of the gas generator (12) of at least one turbomachine (4) to confirm that the request for stopping the engine is a request for quickly stopping the main rotor (2),
- in the event of absence of the thermal stabilization phase, maintaining (140, 240) the rotation of the gas generator (12) for each turbomachine (4) of which the combustion chamber is extinguished, by means of said at least one electrical machine mechanically coupled to the gas generator and powered by the electrical network, to ventilate the gas generator (12), and
- stopping (160, 260) the main rotor (2) of the helicopter (1) by means of a brake, the rotation by said at least electrical machine of the extinguished gas generator (12) is maintained for a predefined ventilation period starting with the extinction of the combustion chamber, and the power supply of the electrical machine is stopped at the end of the ventilation period.

2. The method according to one of claims 1 or 2, wherein the rotation of the extinguished gas generator is maintained for a predefined ventilation period, but shut off before the expiration of this ventilation period as soon as the measured temperature of the gas generator is less than the first threshold.

3. The method according to one of claims 1 to 3, wherein the helicopter (1) comprises at least two turbomachines (4) each having a free turbine (13) connected to the main rotor (2) via the main gearbox (5), and the method also comprises, prior to the step of requesting (100, 200) the quick stop of the engine, a step of requesting operation in auxiliary power unit mode of at least one turbomachine (4) driving the following steps managed by the control unit of the turbomachine (4):
- increasing (212) the torque of at least one turbomachine until at least one other turbomachine supplies a zero torque to the main gearbox,
- disengaging (214) said at least one turbomachine supplying a zero torque, and
- operating (216) in auxiliary power unit mode said at least one disengaged turbomachine to drive an electrical machine and power supply the electrical network of the helicopter,
the step of requesting (100, 200) quick stop of the engine by the helicopter pilot (1) causing the extinction (230) of the combustion chamber of the gas generator of each turbomachine still engaged to the main gearbox, and the step of detecting (110, 210) the absence of a thermal stabilization phase being applied to the gas generator (12) of each turbomachine still engaged to the main gearbox.

4. The method according to claim 4, wherein the step of requesting operation in auxiliary power unit mode of at least one turbomachine is requested by the helicopter pilot (1) prior to the step of requesting (100, 200) the quick stop of the engine, and information on the actual operation in auxiliary power unit mode of at least one turbomachine is transmitted to the pilot prior to his request (100, 200) for quickly stopping the engine.

5. The method according to at least one of claims 1 to 5, wherein the electrical network of the helicopter is configured to be power supplied by at least one alternator driven by an auxiliary power unit.

6. The method according to one of claims 1 to 6, wherein the electrical network of the helicopter comprises at least one battery of the electrical network powering said electrical machine.
